# EUROPEAN PATENT APPLICATION

(11) **EP 1 429 225 A1**
(43) Date of publication of application: **16.06.2004**
(21) Application number: 02354194.9
(22) Date of filing: 13.12.2002
(51) Int. Cl.: G06F 1/00, G06F 17/60

(54) **Methods and apparatus relating to product class issues, product detection and customer support**

(71) Applicant: Hewlett-Packard Company, Palo Alto, CA 94304 (US)
(72) Inventor: Le Rouzo, Christophe, 38420 Le Versoud (FR); Owhadi, Eric, 38360 Sassenage (FR)
(74) Representative: Lloyd, Richard Graham

(57) **Abstract**

A method of detecting a non-virus component in a virus-protected computer system comprising identifying a software trace of the component and conveying the trace to the computer system as a virus pseudo-signature to allow detection of the component by the system's antivirus software.

## Description

### Technical Field of the Invention and Overview of the Prior Art

This invention relates, in broad terms, to the phenomenon of "class issues", which arise when problems are identified with classes, batches or series, for example, of computer hardware and software products after the products have been shipped and installed on end-user systems.

Where such problems arise, product providers may have to locate all of the intended recipients of the product concerned, so that they may be made aware of the problem and so that appropriate remedial action may be taken, such as effecting a product recall, providing replacement components, in the case of hardware problems, or, where code is concerned, software patches.

This, at best, is a very difficult task: at worst, it can be impossible.

Alternatively, product providers can advertise publicly the problem experienced and invite any recipients of the product concerned to contact them, with a view to taking appropriate corrective action or to obtaining software upgrades, for example. This approach, however, is clearly undesirable from a marketing viewpoint as it alerts the world at large to the problems concerned.

As will be appreciated, such problems can arise not only in relation to a specific hardware or software component, but also in relation to ranges of products such as multi-platform software applications and hardware devices having a number of optional specifications.

### Summary of the Invention

In accordance with a first aspect of the present invention, there is provided a method of detecting a non-virus component in a virus-protected computer system comprising identifying a software trace of the component and conveying the trace to the computer system as a virus pseudo-signature to allow detection of the component by the system's antivirus software.

It should be understood, in the context of this specification, that the term "virus pseudo-signature" is intended to refer to a signature that has the appearance and/or traits of a genuine virus signature but which, in fact, is not indicative of the presence of a virus but rather of a non-virus component. The term "pseudo" is thus intended to indicate that whilst the entity appears to be a virus signature, it is in fact indicative of the presence of a non-virus entity.

The trace may be conveyed to the computer system as part of an update procedure, whereby additional virus signatures or scanning engines may also be passed to the antivirus software.

The component may be a hardware device, with the software trace being indicative of the presence of the device in the computer system.

The software trace may be resident in a volatile area of the system's memory.

The pseudo-signature may be tagged or otherwise marked to distinguish it from authentic virus signatures.

The antivirus software may be modified so as to react differently to the presence of pseudo and authentic virus signatures. The modification may be effected as part of the update procedure.

The antivirus software may be modified so that it does not attempt to fix, clean, modify or delete the component associated with the pseudo-signature.

Detection of the pseudo-signature may cause an advisory message to be conveyed to a user of the system, advising the user of the presence of the detected component.

Detection of the pseudo-signature may, in addition or alternatively, effect a connection to a website providing details of the component concerned.

In accordance with a second aspect of the present invention, there is provided a method of facilitating the detection of a non-virus component in a first virus-protected computer system comprising identifying, on a second computer system, a software trace of the component, and conveying the trace towards an antivirus update source whereby the software trace may be passed, as a virus pseudo-signature, to the first computer system.

In accordance with a third aspect of the present invention, there is provided a method of detecting, in a virus-protected computer system, the presence of a non-virus component comprising receiving a virus pseudo-signature associated with a software trace of the non-virus component, and comparing the pseudo-signature with software traces disposed within the system's memory.

In accordance with a fourth aspect of the present invention, there is provided apparatus for detecting, in a virus-protected computer system, a non-virus component, comprising a pseudo-signature generation element operative to produce a software trace of the component, and an antivirus support source whereby the software trace may be conveyed, as a virus pseudo-signature, to the computer system.

In accordance with a fifth aspect of the present invention, there is provided an antivirus update source having a reception element operative to receive software traces indicative of the presence, in a computer system, of a non-virus component, and a dispatch element operative to convey virus signatures to a plurality of computer systems in addition to a pseudo-signature produced in response to the received software trace.

In accordance with a sixth aspect of the present invention, there is provided an antivirus software element having a virus scanning engine and a signature table containing a plurality of virus signatures, the element also having a distinguishing capability whereby the element responds differently to the detection of virus signatures and virus pseudo-signatures, the latter being indicative of the presence of a non-virus component in a host computer system.

In accordance with a seventh aspect of the present invention, there is provided use of an antivirus software element to detect, in a virus-protected computer system, a non-virus component, comprising receiving a virus pseudo-signature generated from a software trace of the component and scanning a host computer system, using the software element, so as to detect the presence of any component therein, having a matching software trace.

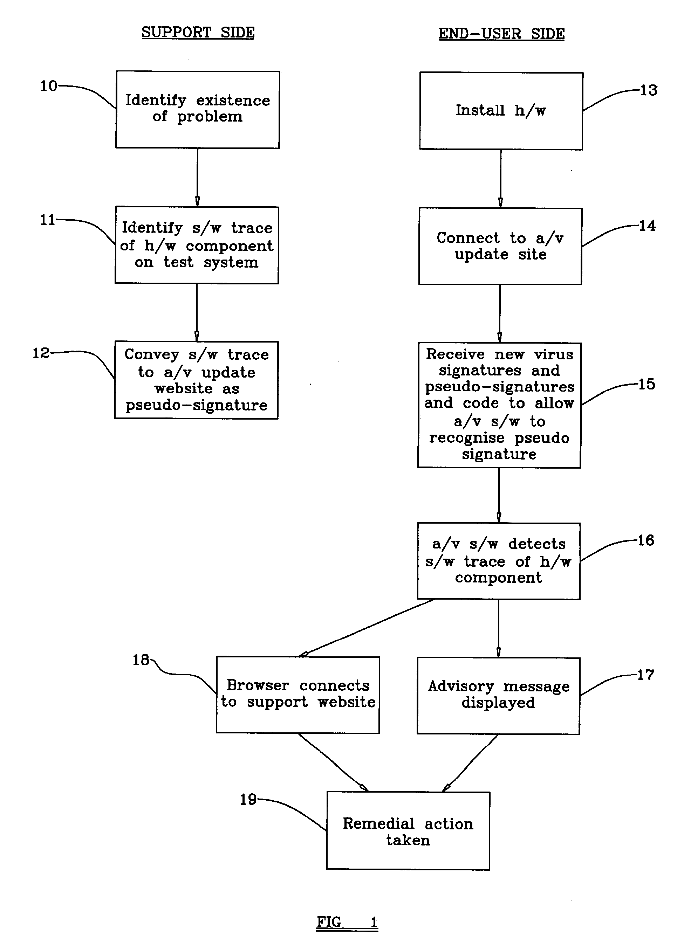

### Brief Description of the Drawing

A specific and non-limiting embodiment of the invention, in its various aspects, will now be described by reference to the accompanying drawing which shows, in a flow-diagram manner, the steps taken in implementing the method concerned, on both support and end-user sides.

### Detailed Description of a Preferred Embodiment and Best Mode of the Invention

Looking first at the steps taken on the support side, by a hardware product consumer support provider, for example, a problem identification step 10 first occurs, by which the support provider is made aware of operational difficulties that users have experienced with a given hardware device.

As will be understood by those well-versed in the relevant art, installation and use of a computer hardware device gives rise to a software trace of the device concerned in a software area of the computer system: as an example, certain Hard Disk Drives (HDDs) are detected by a computer system's Operating System with it thus being possible to identify, by analysis/interrogation of an appropriate area of the Operating System, the manufacturer and serial number (for example) of the device concerned.

Although it may well be necessary to conduct the exercise many times, to take account of differing Operating Systems and infrastructure platforms, step 11 shows that an identification occurs of an appropriate software trace on a test system. Thus, an analysis is made of a test system so that the software trace left by the hardware product in issue can be identified.

Subsequently, the thus-identified software trace is conveyed to an antivirus update source such as a website, whereby subscribers to the antivirus update service will be made aware of the software trace when a subsequent connection is made to the update site. By this mechanism, the software trace is passed to the update source in the guise of a virus pseudo-signature, for later detection by an end-user's antivirus application.

Looking next at the end-user side, the process begins with the installation 13 of the hardware device.

It may well be the case, of course, that the user is unaware of any problem with the device, as operational problems can sometimes arise only in specific circumstances or only when particular demands are placed upon the end user's system, for example. As is now almost standard in the case of networked and internet-connected computers, the end user system will, on a repeated or periodic basis, seek to update the antivirus software loaded onto the system, to ensure that the system remains protected against virus problems, as new virus signatures come into existence on a near-continuous basis. Indeed, it is currently thought that, in the absence of any upgrades, standard antivirus software becomes out-of-date within about 15 days.

When a subsequent connection is made to the antivirus update site, conveniently using a web connection, the system will be provided with a number of updating data files comprising new virus signatures, which allow the antivirus software to detect the presence of any virus or virus-infected code on the system's volatile and non-volatile data storage devices. The system will also be provided with the pseudo-code (the software trace) conveyed to the update website at step 12, meaning that the antivirus software will then detect the presence of the hardware component that gives rise to the software trace associated with the pseudo-code (see step 16), thus causing the antivirus software to display an advisory message (step 17) informing a user of the system that the hardware component concerned has been identified as being present on the system and explaining what remedial action might be appropriate. Alternatively, on a more automated basis, detection of the software trace may cause a browser application to be launched to enable a connection to be made to a support website (step 18) which provides the user with more detailed information on any remedial action that may be necessary, thus allowing such action to be taken, at step 19.

What will be understood from the foregoing is that the present invention, whilst inherently simple in nature, offers a real improvement to the manner in which class issue problems can be addressed, by realising that the prevalence of antivirus software and automated update mechanisms provides a ready medium by which hardware tracking can be effected. All that is required, on the system side, is the presence of an antivirus application having an automated update facility, with it being relatively straightforward for software traces of hardware devices to be conveyed, to an antivirus support site, as a pseudo-signature, which will eventually be detected by systems having the hardware in question. From the point of view of a support provider, the system is not only attractive in terms of simplicity of use, but also is advantageous in that it avoids the need to broadcast the existence of any hardware problems, with it being necessary, in this way, only to alert those users who have actually installed the hardware concerned.

Similarly, whilst it may be appropriate to effect a modest upgrade to the antivirus application, to allow it to identify and deal appropriately with pseudo-signatures, this can easily be achieved in parallel, for example, with existing update procedures that are used to amend and upgrade key aspects of antivirus applications such as the virus-scanning engines, for example.

Whilst the specific embodiment described above relates to problems experienced with hardware devices, it will of course be understood that the invention lends itself equally well to the identification of software components so that application problems, bugs and other deficiences can be dealt with in much the same way. Indeed, any element of a computer system that has a software trace resident on the system concerned can be identified in this manner.

As a final point, it should be understood that the term "virus" is intended to encompass a broad variety of software entities such as true virus coding that "piggybacks" on genuine programs and applications, in addition to e-mail viruses, worms and trojan horses, for example.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of detecting a non-virus component in a virus-protected computer system comprising identifying a software trace of the component and conveying the trace to the computer system as a virus pseudo-signature to allow detection of the component by the system's antivirus software.

2. A method according to claim 1 wherein the trace is conveyed to the computer system as part of an update procedure, whereby additional virus signatures or scanning engines may also be passed to the antivirus software.

3. A method according to claim 1 or claim 2 wherein the component is a hardware device and wherein the software trace is indicative of the presence of the device in the computer system.

4. A method according to claim 3 wherein the software trace is resident in a volatile area of the system's memory.

5. A method according to any one of the preceding claims wherein the pseudo-signature is tagged or otherwise marked to distinguish it from authentic virus signatures.

6. A method according to claim 5 wherein the antivirus software is modified so as to react differently to the presence of pseudo and authentic virus signatures.

7. A method according to claim 6 wherein the modification is effected as part of the update procedure.

8. A method according to claim 6 or claim 7 wherein the antivirus software does not attempt to fix, clean, modify or delete the component associated with the pseudo-signature.

9. A method according to claim 6, claim 7 or claim 8 wherein detection of the pseudo-signature causes an advisory message to be conveyed to a user of the system, advising the user of the presence of the detected component.

10. A method according to any one of claims 6 to 9 wherein detection of the pseudo-signature effects a connection to a website providing details of the component concerned.

11. A method of facilitating the detection of a non-virus component in a first virus-protected computer system comprising identifying, on a second computer system, a software trace of the component, and conveying the trace towards an antivirus update source whereby the software trace may be passed, as a virus pseudo-signature, to the first computer system.

12. A method of detecting, in a virus-protected computer system, the presence of a non-virus component comprising receiving a virus pseudo-signature associated with a software trace of the non-virus component, and comparing the pseudo-signature with software traces disposed within the system's memory.

13. A method according to claim 12 wherein, in the event of a match being found, the antivirus software of the system is operative to convey, to a user of the system, an advisory message advising of the presence of the detected component.

14. Apparatus for detecting, in a virus-protected computer system, a non-virus component, comprising a pseudo-signature generation element operative to produce a software trace of the component, and an antivirus support source whereby the software trace may be conveyed, as a virus pseudo-signature, to the computer system.

15. An antivirus update source having a reception element operative to receive software traces indicative of the presence, in a computer system, of a non-virus component, and a dispatch element operative to convey virus signatures to a plurality of computer systems in addition to a pseudo-signature produced in response to the received software trace.

16. An antivirus software element having a virus scanning engine and a signature table containing a plurality of virus signatures, the element also having a distinguishing capability whereby the element responds differently to the detection of virus signatures and virus pseudo-signatures, the latter being indicative of the presence of a non-virus component in a host computer system.

17. Use of an antivirus software element to detect, in a virus-protected computer system, a non-virus component, comprising receiving a virus pseudo-signature generated from a software trace of the component and scanning a host computer system, using the software element, so as to detect the presence of any component therein, having a matching software trace.
